# EUROPÄISCHE PATENTSCHRIFT

(11) **EP 1 752 353 B1**
(45) Veröffentlichungstag und Bekanntmachung des Hinweises auf die Patenterteilung: **12.12.2007**
(21) Anmeldenummer: 05017411.9
(22) Anmeldetag: 10.08.2005
(51) Int. Cl.: B61G 9/10, B61G 11/16, F16F 7/12

(54) **Energieverzehrvorrichtung mit erhöhter Ansprechkraft**
Energy dissipating device with increased response force
Dispositif d'absorption d'énergie à force de réaction élevée

(43) Veröffentlichungstag der Anmeldung: 14.02.2007
(73) Patentinhaber: Voith Turbo Scharfenberg GmbH & Co. KG, 38239 Salzgitter-Watenstedt (DE)
(72) Erfinder: Kemper, Andreas, Dipl.-Ing. (FH), 38268 Lengede (DE)
(74) Vertreter: Rupprecht, Kay

(56) Entgegenhaltungen:
- EP-A- 1 247 716
- WO-A-20/05023618
- CH-A- 265 703

## Beschreibung

Die vorliegende Erfindung betrifft eine Energieverzehrvorrichtung mit einem ersten Kraftübertragungselement, einem zweiten Kraftübertragungselement und einem ersten Energieverzehrelement, wobei die Kraftübertragungselemente mit Hilfe des ersten Energieverzehrelementes derart kraftschlüssig miteinander verbunden sind, dass Zug- und Stoßkräfte in Längsrichtung der Energieverzehrvorrichtung übertragbar sind, indem der bei der Übertragung der Kräfte stattfindende Kraftfluss zumindest teilweise durch das erste Energieverzehrelement hindurch läuft, wobei das erste Energieverzehrelement derart ausgelegt ist, dass bis zu einem durch den Kraftfluss über das erste Energieverzehrelement übertragenen, festlegbaren ersten Energiebetrag die Kraftübertragungselemente relativ zueinander in Längsrichtung der Energieverzehrvorrichtung im Wesentlichen starr sind, und dass bei Überschreiten des durch den Kraftfluss über das erste Energieverzehrelement übertragenen, festlegbaren ersten Energiebetrages die Kraftübertragungselemente relativ zueinander in Längsrichtung der Energieverzehrvorrichtung verschoben werden, wobei zumindest ein Teil des übertragenen Energiebetrags von dem ersten Energieverzehrelement absorbiert und abgebaut wird.

Derartige Energieverzehrvorrichtungen sind im Prinzip aus dem Stand der Technik bekannt (WO 2005 023 618 A) und werden beispielsweise in der Schienenfahrzeugtechnik als Stoßsicherung eingesetzt. In der Regel besteht eine solche Stoßsicherung aus einer Kombination aus einer Zug-/Stoßeinrichtung (Federapparat) und einer Energieverzehrvorrichtung, wobei die Stoßsicherung das Fahrzeug insbesondere auch bei größeren Auffahrgeschwindigkeiten schützt. Dabei ist beispielsweise vorgesehen, dass die Zug-/Stoßeinrichtung Zug- und Druckkräfte bis zu einer definierten Größe aufnimmt und darüber hinausgehende Kräfte in das Fahrzeuguntergestell weiterleitet. Dadurch werden zwar Zug- und Stoßkräfte, welche während des normalen Fahrbetriebes beispielsweise bei einem mehrgliedrigen Fahrzeug zwischen einzelnen Wagenkästen auftreten, in dieser in der Regel regenerativ ausgebildeten Stoßsicherung absorbiert, bei Überschreiten der Betriebslast der Zug-/Stoßeinrichtung hingegen, etwa beim Aufprall des Fahrzeuges auf ein Hindernis oder bei einem abrupten Abbremsen des Fahrzeuges, wird die regenerativ ausgebildete Stoßsicherung und die gegebenenfalls vorgesehene Gelenkverbindung zwischen den einzelnen Wagenkästen möglicherweise zerstört oder beschädigt. In jedem Fall reicht die Zug-/Stoßeinrichtung nicht für einen Verzehr der anfallenden Energie aus. Dadurch ist diese Stoßsicherung dann nicht mehr in dem Energieverzehrkonzept des Gesamtfahrzeuges eingebunden, so dass die anfallende Stoßenergie direkt auf das Fahrzeuguntergestell übertragen wird. Dabei wird dieses extremen Belastungen ausgesetzt und unter Umständen beschädigt oder gar zerstört. Bei Schienenfahrzeugen läuft in solch einem Fall der Wagenkasten Gefahr, zu entgleisen.

Mit dem Ziel, das Fahrzeuguntergestell gegen Beschädigungen bei starken Auffahrstößen zu schützen, kommt häufig ein destruktiv oder regenerativ ausgebildetes Energieverzehrelement zum Einsatz, das beispielsweise derart ausgelegt ist, dass nach Ausschöpfung des Arbeitsverzehrs der Zug-/Stoßeinrichtung das Energieverzehrelement anspricht und die durch den Kraftfluss über das Energieverzehrelement übertragene Energie zumindest teilweise absorbiert und somit abbaut. Als Energieverzehrelemente kommen beispielsweise Verformungsrohre in Frage, bei denen durch eine definierte Verformung eines Elementes in destruktiver Weise die Stoßenergie in Verformungsarbeit und Wärme umgewandelt wird.

Ein Energieverzehrelement, in dem ein Verformungsrohr verwendet wird, zeichnet sich dadurch aus, dass es eine definierte Ansprechkraft ohne Kraftspitzen aufweist. Jedoch sind aus dem Stand der Technik auch regenerativ ausgebildete Energieverzehrelemente bekannt. Ein Beispiel hierfür sind gashydraulische Puffer mit einer regenerativen bzw. selbstrestaurierenden Arbeitsweise. Energieverzehrelemente, die auf einer gashydraulischen Arbeitsweise basieren, haben in der Regel eine geringe Ansprechkraft und Vorspannung und reagieren ― im Gegensatz zu einem Verformungsrohr ― geschwindigkeitsabhängig.

Neben Energieverzehrelemente, die auf einer gashydraulischen Arbeitsweise basieren, sind auch Energieverzehrelemente bekannt, die auf einer hydrostatischen Arbeitsweise basieren, und die ebenso regenerativ (selbstrestaurierend) wirken. Hydrostatisch arbeitende Energieverzehrelemente haben im Gegensatz zu gashydraulisch arbeitenden Energieverzehrelementen eine hohe Ansprechkraft und Vorspannung.

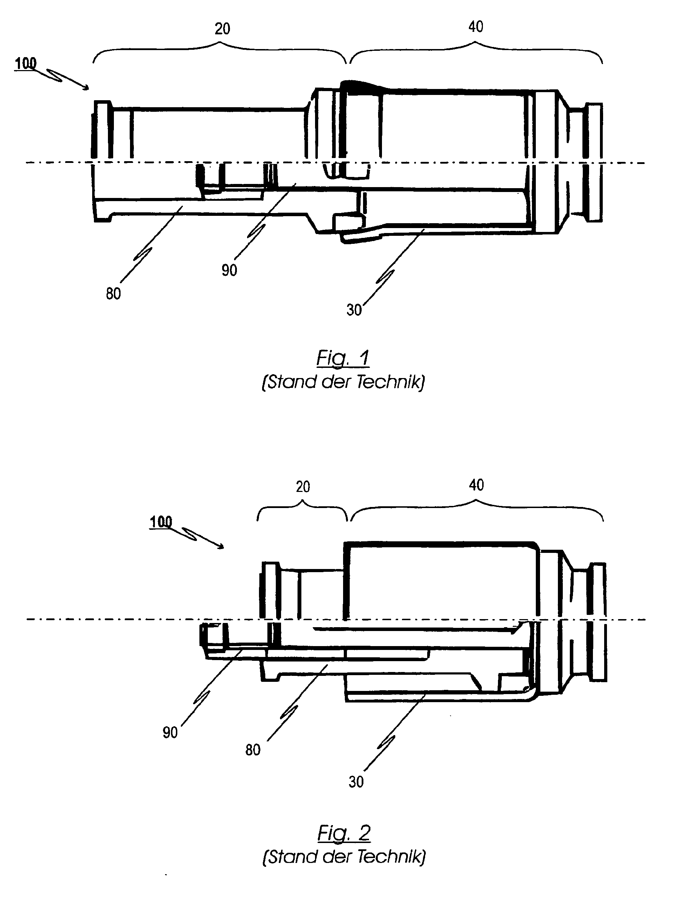

In Fig. 1 ist eine aus dem Stand der Technik bekannte Energieverzehrvorrichtung 100 gezeigt, bei der ein Verformungsrohr 30 zum Einsatz kommt. Die untere Hälfte der Energieverzehrvorrichtung 100 ist in Fig. 1 in längsgeschnittener Darstellung gezeigt. Diese aus dem Stand der Technik bekannte Energieverzehrvorrichtung 100 weist ein erstes Kraftübertragungselement 20 und ein zweites Kraftübertragungselement 40 auf, die mit Hilfe eines Energieverzehrelementes 30 (Verformungsrohr) derart kraftschlüssig miteinander verbunden sind, dass Zug- und Stoßkräfte in Längsrichtung der Energieverzehrvorrichtung 100 übertragbar sind. Bei der Übertragung der Zug- und Stoßkräfte läuft der Kraftfluss von dem ersten Kraftübertragungselement 20 zu dem zweiten Kraftübertragungselement 40 im wesentlichen vollständig über das als Energieverzehrelement ausgebildete Verformungsrohr 30. In Fig. 1 ist ein normaler Betriebszustand gezeigt, bei welchem die über die Energieverzehrvorrichtung 100 durch Zug- und Stoßkräfte übertragene Energie geringer als der für das Ansprechen des Energieverzehrelementes 30 (Verformungsrohr) charakteristische Energiebetrag ist. Wie zu erkennen ist, sind die Kraftübertragungselemente 20, 40 relativ zueinander in Längsrichtung der Energieverzehrvorrichtung 100 im wesentlichen starr.

In Fig. 2 ist ein Zustand nach dem Ansprechen der Energieverzehrvorrichtung 100 gemäß Fig. 1 gezeigt. Wie bereits zuvor genannt, ist die Energieverzehrvorrichtung 100 derart ausgelegt, dass der bei der Übertragung von Zug- und Stoßkräften von dem ersten Kraftübertragungselement 20 zu dem zweiten Kraftübertragungselement 40 (und umgekehrt) stattfindende Kraftfluss im wesentlichen vollständig durch das Verformungsrohr 30 hindurch läuft. Das Verformungsrohr 30 selber ist derart ausgelegt, dass bei Überschreiten eines durch den Kraftfluss über das Verformungsrohr 30 übertragenen Energiebetrages eine plastische Verformung des Elementes 30 stattfindet, so dass die Kraftübertragungselemente 20 ,40 relativ zueinander in Längsrichtung der Energieverzehrvorrichtung 100 verschoben werden, wodurch infolge der destruktiven Verformung des Verformungsrohres 30 zumindest ein Teil des übertragenen Energiebetrags von dem Energieverzehrelement 30 absorbiert und in Verformungsarbeit und Wärme umgewandelt und somit abgebaut wird.

Eine derartige Energieverzehrvorrichtung, wie sie als Beispiel in den Fig. 1 und 2 dargestellt ist, weist eine im wesentlichen rechteckig verlaufende Kennlinie auf, wodurch eine maximale Energieaufnahme nach dem Ansprechen des Energieverzehrelementes sichergestellt ist. Des weiteren zeichnet sich eine Energieverzehrvorrichtung, in der ein destruktiv ausgebildetes Verformungselement integriert ist, durch eine definierte Ansprechkraft ohne Kraftspitzen aus.

Dadurch, dass Energieverzehrvorrichtungen, in denen ein destruktiv ausgebildetes Energieverzehrelement integriert ist, in der Regel eine durch das Energieverzehrelement (Verformungsrohr) vorgegebene rechtseckige Kennlinie aufweisen, ist es nicht möglich, solche Energieverzehrvorrichtungen an bestimmte Anwendungen genau anzupassen. Hierzu wäre es erforderlich, die Kraft-Weg-Kennlinie der Energieverzehrvorrichtung entsprechend auszulegen, um einen vorhersehbaren, definierten Energieverzehr zu ermöglichen.

Der Einsatz von Energieverzehrvorrichtungen, in denen ein hydrostatisch arbeitendes Energieverzehrelement zum Einsatz kommt, und die von daher im wesentlichen eine linear steigende Kennlinie aufweisen, ist ebenfalls für viele Anwendungen häufig nicht geeignet, da die maximale Energieaufnahme der entsprechenden Energieverzehrelemente oftmals zu gering ist.

Insbesondere besteht bei vielen Anwendungen ein Bedarf dahingehend, eine Energieverzehrvorrichtung einzusetzen, die sich einerseits durch eine maximale Energieaufnahme und andererseits durch eine erhöhte Ansprechkraft auszeichnet. So ist es oftmals erwünscht, dass die Energieverzehrvorrichtung erst bei einer erhöhten Ansprechkraft aktiviert wird, d.h. ihre Funktion als starres Verbindungsglied zur Kraftübertragung zumindest teilweise verliert und einen Teil der durch den Kraftfluss über die Energieverzehrvorrichtung übertragenen Energie absorbiert, wobei allerdings nach dem Ansprechen der Energieverzehrvorrichtung auch dann noch ein durch den Kraftfluss übertragener Energiebetrag absorbiert wird, wenn der Kraftfluss geringer als der für das erstmalige Ansprechen der Energieverzehrvorrichtung notwendige charakteristische Kraftfluss ist.

Um diese Aufgabe zu lösen, wäre es denkbar, eine Energieverzerrvorrichtung anzunehmen, in der ein herkömmlich ausgebildetes, destruktiv arbeitendes Energieverzehrelement (Verformungselement) integriert ist, und die sich infolge der für solche Energieverzehrelemente (Verformungselemente) charakteristischen, rechtseckigen Kennlinie durch eine maximale Energieaufnahme auszeichnet, wobei des weiteren quer zur Kraftrichtung platzierte Abscherelemente vorgesehen sind. Die Abscherelemente dienen bis zu einem durch den Kraftfluss über die Abscherelemente übertragenen, festlegbaren Energiebetrag als starre Verbindungsglieder, die allerdings nach Überschreiten des für die Abscherelemente charakteristischen Energiebetrages ihre Funktion als Verbindungsglieder vollständig verlieren und ein Ansprechen und somit eine Deformation des in der Energieverzehrvorrichtung vorgesehenen, destruktiv ausgebildeten Energieverzehrelements (Verformungselements) gestatten. Bei solch einer Lösung wäre ― mit einer geeigneten Auslegung der Abscherelemente sowie der Energieverzehrelemente ― zwar eine Kraft-Weg-Kennlinie erzielbar, die sich durch eine erhöhte Ansprechkraft auszeichnet, allerdings ist eine solche Lösung in der Praxis häufig nur bedingt verwendbar, da die prinzipbedingte notwendige Vorspannung des Energieverzehrelements (Verformungselements) nicht auf solche Abscherelemente aufgebracht werden darf. Da nämlich das Energieverzehrelement (Verformungselement) derart ausgelegt ist, dass es im normalen Betrieb eine kraftschlüssige Verbindung zwischen dem ersten und dem zweiten Kraftübertragungselement bereitstellt, wobei die derart verbundenen Kraftübertragungselemente relativ zueinander in Längsrichtung der Energieverzehrvorrichtung im wesentlichen starr sind, ist es prinzipbedingt notwendig, das Verformungselement bzw. Energieverzehrelement zwischen den Kraftübertragungselementen entsprechend vorzuspannen.

Auf der Grundlage der geschilderten Problemstellung liegt der vorliegenden Erfindung nun die Aufgabe zugrunde, eine Energieverzehrvorrichtung der eingangs genannten Art derart weiterzubilden, dass zum einen die durch einen extremen Stoß über die Energieverzehrvorrichtung übertragene Stoßenergie zuverlässig abgebaut werden kann, und dass zum anderen die Kraft-Weg-Kennlinie der Energieverzehrvorrichtung an einzelne Anwendungen möglichst genau angepasst werden kann.

Diese Aufgabe wird nun bei einer Energieverzehrvorrichtung der eingangs genannten Art dadurch gelöst, dass die Energieverzehrvorrichtung ferner zumindest ein zweites Energieverzehrelement aufweist, welches in Bezug auf die Kraftübertragungselemente derart angeordnet ist, dass Zug- und Stoßkräfte in Längsrichtung der Energieverzehrvorrichtung übertragbar sind, indem der bei der Übertragung der Kräfte stattfindende Kraftfluss zumindest teilweise durch das zweite Energieverzehrelement hindurch läuft, wobei das zweite Energieverzehrelement derart ausgelegt ist, dass bis zu einem durch den Kraftfluss durch das zweite Energieverzehrelement übertragenen, festlegbaren zweiten Energiebetrag die Kraftübertragungselemente relativ zueinander in Längsrichtung der Energieverzehrvorrichtung im wesentlichen starr sind, und dass bei Überschreiten des durch den Kraftfluss über das zweite Energieverzehrelement übertragenen, festlegbaren zweiten Energiebetrages die Kraftübertragungselemente relativ zueinander in Längsrichtung der Energieverzehrvorrichtung verschoben werden, und wobei das erste und das zweite Energieverzehrelement derart parallel zueinander angeordnet sind, dass der bei der Übertragung der Zug- und Stoßkräfte in Längsrichtung der Energieverzehrvorrichtung stattfindende Kraftfluss parallel durch das erste und das zweite Energieverzehrelement läuft.

Die erfindungsgemäße Lösung weist, wie es im folgenden dargelegt wird, eine ganze Reihe wesentlicher Vorteile gegenüber der aus dem Stand der Technik bekannten und vorstehend erläuterten Energieverzehrvorrichtung auf. Dadurch, dass in der erfindungsgemäßen Energieverzehrvorrichtung zwei parallel zueinander angeordnete Energieverzehrelemente vorgesehen sind, die jeweils bei einem für das jeweilige Energieverzehrelement spezifischen (festlegbaren) Energiebetrag ansprechen, ist es möglich, die Kennlinie der Energieverzehrvorrichtung an einzelne Anwendungen genau anzupassen. So ist es mit der erfindungsgemäßen Lösung möglich, die für die Energieverzehrvorrichtung charakteristische (Gesamt-)Ansprechkraft vorab festzulegen, da diese durch die Summe der für die beiden Energieverzehrelemente spezifischen Ansprechkräfte bzw. Ansprechenergien definiert wird. Anders ausgedrückt bedeutet dies, dass die für die Energieverzehrvorrichtung charakteristische Ansprechkraft genau bestimmt werden kann, indem die Ansprechkräfte der jeweiligen Energieverzehrelemente im voraus entsprechend festgelegt werden. Dadurch, dass nach dem Ansprechen der Energieverzehrvorrichtung sowohl das erste Energieverzehrelement als auch das zweite Energieverzehrelement jeweils zumindest einen Teil des über die Enexgieverzehrvorrichtung übertragenen Energiebetrags absorbieren und abbauen, kann ferner der Energieverzehrablauf der Energieverzehrvorrichtung im voraus festgelegt und insbesondere an bestimmte Anwendungen speziell angepasst werden. An dieser Stelle sei darauf hingewiesen, dass das jeweilige Energieverzehrelement denjenigen Teil-Energiebetrag des gesamten, durch Zug- und Stoßkräfte in Längsrichtung der Energieverzehrvorrichtung übertragenen Energiebetrages absorbiert und abbaut, der dem Integral der für das jeweilige Energieverzehrelement charakteristischen Kraft-Weg-Kennlinie entspricht. Hierbei ist zu berücksichtigen, dass ― infolge der erfindungsgemäßen Parallelanordnung der einzelnen Energieverzehrelemente ― der Gesamt-Kraftfluss, der von der Energieverzehrvorrichtung bzw. von dem ersten und dem zweiten Kraftübertragungselement übertragen wird, entsprechend auf das erste und das zweite Energieverzehrelement aufgeteilt wird, so dass über jedes einzelne Energieverzehrelement nur ein entsprechender Teilbetrag des Gesamt-Kraftflusses und somit der Gesamt-Energie übertragen wird. Dabei ist zu berücksichtigen, dass gemäß der Erfindung das erste und zweite Energieverzehrelement derart ausgelegt sind, dass die Kraftübertragungselemente bis zu einem durch den Kraftfluss über das jeweilige Energieverzehrelement übertragenen, festlegbaren ersten bzw. zweiten Energiebetrag relativ zueinander in Längsrichtung der Energieverzehrvorrichtung im wesentlichen starr sind. Unter dem Ausdruck "im wesentlichen starr" ist in dieser Spezifikation gemeint, dass zwischen dem ersten und zweiten Kraftübertragungselement auch vor dem Ansprechen der Energieverzehrvorrichtung im Idealfall kein Spiel vorliegt.

Vorteilhafte Weiterbildungen der erfindungsgemäßen Energieverzehrvorrichtung sind in den Unteransprüchen angegeben.

So ist bei einer besonders bevorzugten Ausführungsform der erfindungsgemäßen Energieverzehrvorrichtung vorgesehen, dass die parallel geschalteten Energieverzehrelemente derart ausgelegt sind, dass der bei der Übertragung der Zug- und Stoßkräfte in Längsrichtung der Energieverzehrvorrichtung stattfindende Kraftfluss im wesentlichen vollständig durch die Energieverzehrelemente hindurch läuft. Damit kann erreicht werden, dass der Energieverzehr der Energieverzehrvorrichtung vorab durch Auslegung der einzelnen Energieverzehrelemente genau festlegbar ist. Demnach ist es möglich, eine Energieverzehrvorrichtung mit einer genau festlegbaren, und insbesondere mit einer an einzelne Anwendungen genau angepassten (Gesamt-)Kennlinie bereitzustellen, wobei diese (Gesamt-)Kennlinie nahezu ausschließlich durch eine Superposition der Einzelkennlinien der in der Energieverzehrvorrichtung integrierten Energieverzehrelemente bestimmt wird. Selbstverständlich ist aber auch denkbar, dass der bei der Übertragung der Zug- und Stoßkräfte in Längsrichtung der Energieverzehrvorrichtung stattfindende Kraftfluss nur teilweise durch die Energieverzehrelemente hindurch läuft, wobei der restliche Teil des Kraftflusses mit Hilfe von geeigneten Einrichtung an den Energieverzehrelementen vorbeigeleitet wird, so dass dieser Teil direkt von den Kraftübertragungselementen übertragen wird.

Um einen im voraus festlegbaren und an eine bestimmte Anwendung möglichst genau angepassten Kennlinienverlauf der Energieverzehrvorrichtung zu ermöglichen, ist in einer besonders bevorzugten Weiterbildung der zuvor beschriebenen Ausführungsformen vorgesehen, dass der bei der Übertragung der Zug- und Stoßkräfte in Längsrichtung der Energieverzehrvorrichtung stattfindende Kraftfluss im wesentlichen vollständig durch die parallel geschalteten Energieverzehrelemente hindurch läuft, wobei der Anteil des Betrages der durch den Kraftfluss durch das erste und/oder durch das zweite Energieverzehrelement übertragenen Energie vorab festlegbar ist. Die besonderen Vorteile dieser Ausführungsform sind insbesondere darin zu sehen, dass ― trotz der parallelen Anordnungen der Energieverzehrelemente ― die jeweiligen durch ein bestimmtes Energieverzehrelement geleiteten Kraftflüsse mit Hilfe einer geeigneten konstruktiven Maßnahme derart festgelegt werden können, dass sie unterschiedliche Beträge aufweisen. Dadurch ist es möglich, in der erfindungsgemäßen Energieverzehrvorrichtung Energieverzehrelemente mit jeweils unterschiedlichen Kennlinienverläufen parallel einzusetzen, wobei durch eine geeignete Aufteilung der durch den Kraftfluss durch die einzelnen Energieverzehrelemente übertragenen Energie die Empfindlichkeit der Energieverzehrvorrichtung sowie der Verlauf der Kennlinie nahezu beliebig beeinflusst werden können.

In einer bevorzugten, wenn auch teilweise beispielsweise aus der Schienenfahrzeugtechnik bekannten Weiterentwicklung der zuvor genannten bevorzugten Ausführungsformen der erfindungsgemäßen Energieverzehrvorrichtung ist vorgesehen, dass das erste und/oder das zweite Energieverzehrelement destruktiv ausgebildet sind/ist. Dadurch, dass gemäß der Erfindung in der Energieverzehrvorrichtung die Energieverzehrelemente parallel zueinander angeordnet sind, so dass der Gesamt-Kraftfluss, der bei der Übertragung von Zug- und Stoßkräften von dem ersten Kraftübertragungselement zu dem zweiten Kraftübertragungselement (und umgekehrt) entsprechend auf die Energieverzehrelemente aufgeteilt wird, und dadurch, dass die daraus resultierende (Gesamt-)Kennlinie der Energieverzehrvorrichtung durch eine Superposition der (Einzel-)Kennlinienverläufe der jeweiligen Energieverzehrelemente gebildet wird, ist es mit dieser bevorzugten Ausführungsform der erfindungsgemäßen Energieverzehrvorrichtung möglich, den (Gesamt-) Kennlinienverlauf der Energieverzehrvorrichtung nahezu beliebig vorab festzulegen und an eine spezielle Anwendung anzupassen. Wie eingangs genannt, zeichnen sich beispielsweise Energieverzehrelemente, die ein destruktiv ausgebildetes Verformungselement aufweisen, dadurch aus, dass sie einen nahezu rechteckigen Kennlinienverlauf aufweisen. Andererseits sind beispielsweise regenerativ ausgebildete Energieverzerrelemente, die beispielsweise ein gashydraulisch oder hydrostatisch arbeitendes Pufferelement aufweisen, dadurch gekennzeichnet, dass ihr Kennlinienverlauf eine lineare Steigung aufweist. Da die bei der erfindungsgemäßen Energieverzehrvorrichtung dieser Ausführungsform destruktiv und/oder regenerativ ausgebildeten Energieverzehrelemente im übertragenen Kraftfluss parallel zueinander angeordnet sind, ist der (Gesamt-) Kennlinienverlauf der Energieverzehrvorrichtung vorab nahezu beliebig festlegbar. Selbstverständlich können hier aber auch andere Energieverzehrelemente zum Einsatz kommen, die auf einem anderen Arbeitsprinzip basieren.

In einer vorteilhaften Ausführungsvariante der erfindungsgemäßen Energieverzehrvorrichtung ist ferner zumindest ein regenerativ ausgebildetes Energieverzerrelement vorgesehen. Ein solches regenerativ ausgebildetes Energieverzehrelement kann beispielsweise in der Gestalt einer in der Energieverzehrvorrichtung integrierten Reibungsfeder, Sphärolastikfeder oder Gummifeder ausgeführt sein. Das Vorsehen eines zusätzlichen regenerativ ausgebildeten Energieverzehrelements in der Energieverzehrvorrichtung hat den Vorteil, dass dieses Energieverzehrelement Zug- und Stoßkräfte bis zu einer definierten Größe aufnehmen und darüber hinaus gehende Kräfte auf die Energieverzehrelemente weiterleiten kann. Die ersten und zweiten Energieverzehrelemente sprechen dann an, wenn die über den Arbeitsbereicht des regenerativ ausgebildeten Energieverzehrelements hinausgehenden Kräfte die für die Energieverzehrvorrichtung charakteristische (Gesamt-) Ansprechkraft überschreiten. Ein Vorteil dieser Ausführungsform ist darin zu sehen, dass der Gesamt-Kennlinienverlauf der Energieverzehrvorrichtung noch besser an einen vorgegebenen Ereignisablauf angepasst werden kann. Dadurch, dass bei dieser Ausführungsform der erfindungsgemäßen Energieverzehrvorrichtung bereits vor der für die Energieverzehrvorrichtung charakteristischen (Gesamt-) Ansprechkraft ein Teil der von den Kraftübertragungselementen übertragenen Kräfte (Energie) absorbiert wird, kann erreicht werden, dass der Kennlinienverlauf der Energieverzehrvorrichtung bei geeigneter Auslegung des regenerativ ausgebildeten Energieverzehrelements beispielsweise keine Sprungstellen aufweist. Das regenerativ ausgebildete, zusätzliche Energieverzehrelement kann in der Energieverzehrvorrichtung parallel zu den ersten und zweiten Energieverzehrelementen angeordnet sein. Denkbar wäre aber auch, dieses regenerativ ausgebildete, zusätzliche Energieverzehrelement den ersten und zweiten Energieverzehrelementen vorzuschalten.

In einer besonders bevorzugten Weiterentwicklung der zuvor genannten Ausführungsformen der erfindungsgemäßen Energieverzehrvorrichtung ist vorgesehen, dass das zweite Energieverzehrelement eine Vielzahl von Energieverzehrelementen aufweist. Diese Vielzahl der Energieverzehrelemente kann jeweils unterschiedliche Ansprechkräfte und Energieverzehrkapazitäten aufweisen. Denkbar wäre aber auch, dass die Vielzahl der Energieverzehrelemente alle identisch zueinander ausgebildet sind. Indem bei Bedarf die Vielzahl der Energieverzehrelemente im Hinblick auf den Kraftfluss, der von den Kraftübertragungselementen übertragen wird, parallel zueinander angeordnet wird, ist es möglich, den (Gesamt-)Kennlinienverlauf der Energieverzerrvorrichtung nahezu beliebig vorzugeben, da durch die Vielzahl der Energieverzehrelemente im (Gesamt-) Kennlinienverlauf der Energieverzehrvorrichtung eine Vielzahl von Abstufungen ermöglicht wird.

In einer besonders vorteilhaften Weiterentwicklung der zuvor genannten Ausführungsformen der erfindungsgemäßen Energieverzehrvorrichtung ist vorgesehen, dass der von dem ersten Energieverzehrelement und/oder dem zweiten Energieverzehrelement absorbierte und abgebaute Teil des übertragenen Energiebetrags vorab festlegbar ist. Durch diese besondere Ausgestaltung, bei der die Energieverzehrkapazität der einzelnen Energieverzehrelemente vorab festlegbar ist, ist der Kennlinienverlauf der Energieverzehrvorrichtung optimal an einen Vorgabeereignisablauf anpassbar. Insbesondere ist es hiermit möglich, eine Energieverzehrvorrichtung auszubilden, die im Vergleich zu dem Kennlinienverlauf eine erhöhte Auslösekraft aufweist.

Als weiterer Vorteil erweist sich, dass in einer bevorzugten Weiterentwicklung der genannten Ausführungsformen in der Energieverzehrvorrichtung die Energieverzehrelemente derart angeordnet sind, dass sie nach Überschreiten eines durch Zug- und Stoßkräfte in Längsrichtung der Energieverzehrvorrichtung übertragenen, maximalen Energiebetrags zeitgleich ansprechen und gleichzeitig jeweils einen Teil des maximalen Energiebetrags absorbieren und abbauen. Der nach Überschreiten eines durch Zug- und Stoßkräfte in Längsrichtung der Energieverzehrvorrichtung übertragene, maximale Energiebetrag entspricht dabei der Summe aus dem ersten festlegbaren Energiebetrag und dem zweiten festlegbaren Energiebetrag der jeweiligen Energieverzehrelemente.

In einer möglichen Realisierung der erfindungsgemäßen Energieverzehrvorrichtung weist das erste Kraftübertragungselement einen ersten Stützkörper auf, über den Zug- und Stoßkräfte zu dem zweiten Kraftübertragungselement geleitet werden. Das zweite Kraftübertragungselement weist ferner einen zweiten Stützkörper auf, auf den die von dem ersten Kraftübertragungselement übertragenen Zug- und Stoßkräfte übertragen werden. Ferner weist das erste und/oder zweite Energieverzehrelement jeweils zumindest einen Verformungskörper auf, über welchen die von dem ersten Kraftübertragungselement zu dem zweiten Kraftübertragungselement (und umgekehrt) übertragenen Zug- und Stoßkräfte übertragen werden. Unter dem hierin verwendeten Begriff "Stützkörper" ist jedweder Körper gemeint, dessen primäre Aufgabe darin besteht, Kräfte zu übertragen, und der derart ausgelegt ist, dass er - selbst bei Überschreiten der für die Energieverzehrvorrichtung charakteristischen, maximalen Ansprechkraft - seine Funktion als Stützelement nach wie vor beibehalten. Unter dem hierin verwendeten Begriff "Verformungskörper" ist hingegen ein Körper gemeint, der bis zu einem für diesen Verformungskörper charakteristischen Energiebetrag als Stützelement bzw. Kraftübertragungselement dient (und somit die Kraftübertragungselemente zueinander in einer relativ starren Beziehung hält), wobei der Verformungskörper allerdings derart ausgelegt ist, dass er nach Überschreiten einer für diesen Verformungskörper charakteristischen Energie bzw. Kraft seine Funktion als Kraftübertragungselement zumindest teilweise verliert und deformiert wird, wodurch zumindest ein Teil der übertragenen Energie in Verformungswärme umgewandelt und somit in dem Energiekonzept der Energieverzehrvorrichtung abgebaut wird.

In vorteilhafter Weise ist bei der zuletzt genannten möglichen Realisierung der erfindungsgemäßen Energieverzehrvorrichtung der erste Stützkörper als Hohlkörper, insbesondere als Rohr, und der zweite Stützkörper als Stange ausgebildet, die zumindest teilweise in den Hohlkörper hineinragt. Dadurch ist eine besonders kompakte Energieverzehrvorrichtung möglich. Selbstverständlich sind hier aber auch andere technische Realisierungen denkbar.

Um die prinzipbedingte notwendige Vorspannung der Energieverzehrelemente zwischen den beiden Kraftübertragungselementen zu erreichen, ist es in einer besonders bevorzugten Ausführungsform vorgesehen, dass die Energieverzehrvorrichtung ferner zumindest ein Spannelement aufweist, um die Energieverzehrelemente für die im normalen Betrieb auftretenden Zug- und Stoßkräfte zumindest teilweise spielfrei zwischen den Kraftübertragungselementen vorzuspannen. Ein spielfreies Vorspannen der Energieverzehrelemente in der Energieverzehrvorrichtung ist von Vorteil, da somit ein vorhersehbarer Energieverzehrablauf ermöglicht wird. Insbesondere kann damit gewährleistet werden, dass auch solche Kräfte, die neben einer Kraftkomponente in Längsrichtung der Energieverzehrvorrichtung auch eine Kraftkomponente in Querrichtung der Energieverzehrvorrichtung aufweisen, mit Hilfe der Energieverzehrelemente zuverlässig und vorhersehbar absorbiert und abgebaut werden können.

In einer möglichen Realisierung der zuletzt genannten bevorzugten Ausführungsform der erfindungsgemäßen Energieverzehrvorrichtung, die zumindest ein Spannelement aufweist, und bei der das erste Kraftübertragungselement einen ersten Stützkörper aufweist, über den Zug- und Stoßkräfte zu dem zweiten Kraftübertragungselement geleitet werden, und bei der das zweite Kraftübertragungselement einen zweiten Stützkörper aufweist, auf den Zug- und Stoßkräfte von dem ersten Kraftübertragungselement übertragen werden, ist vorgesehen, dass das Spannelement an dem ersten und/oder dem zweiten Stützkörper ausgebildet ist. Denkbar hierbei wäre, dass das Spannelement als Vorsprung ausgebildet ist, um derart das Vorspannen der Energieverzehrelemente zu ermöglichen. Selbstverständlich sind hier aber auch andere Ausführungsformen denkbar.

Als bevorzugte Verwendung der erfindungsgemäßen Energieverzehrvorrichtung gemäß einer der vorstehend erläuterten Ausführungsformen ist eine Verwendung dieser in einer Gelenk- oder Kupplungsanordnung eines mehrgliedrigen Fahrzeuges, beispielsweise eines Schienenfahrzeuges, vorgesehen. Denkbar hierbei wären aber auch andere Verwendungsarten.

Nachfolgend wird eine bevorzugte Ausführungsform der erfindungsgemäßen Energieverzehrvorrichtung anhand der beigefügten Zeichnungen näher erläutert.

Es zeigen:
- Fig. 1: eine beispielhafte Energieverzehrvorrichtung aus dem Stand der Technik, die zum Teil in einer Schnittdarstellung gezeigt ist, und die sich in einem normalen Betriebszustand befindet;
- Fig. 2: die Energieverzehrvorrichtung gemäß Fig. 1 in einem Zustand nach dem Ansprechen der Energieverzehrvorrichtung;
- Fig. 3: eine vorteilhafte Ausführungsform der erfindungsgemäßen Energieverzehrvorrichtung in einem normalen Betriebszustand, d.h. vor dem Ansprechen der in der Energieverzehrvorrichtung vorgesehenen Energieverzehrelemente;
- Fig. 4: eine Schnittdarstellung der erfindungsgemäßen Energieverzehrvorrichtung gemäß Fig. 3; und
- Fig. 5: ein Kraft-Weg-Kennlinienverlauf der erfindungsgemäßen Energieverzehrvorrichtung gemäß Fig. 3.

Fig. 1 zeigt eine Energieverzehrvorrichtung 100 aus dem Stand der Technik, wobei die untere Hälfte der Energieverzehrvorrichtung 100 teilgeschnitten dargestellt ist. Die Energieverzehrvorrichtung 100 besteht aus einem ersten Kraftübertragungselement 20, einem zweiten Kraftübertragungselement 40 und einem Energieverzehrelement 30, das hier als Verformungsrohr ausgebildet ist. Die Kraftübertragungselemente 20, 40 sind über das Energieverzehrelement 30 derart kraftschlüssig miteinander verbunden, dass Zug- und Stoßkräfte in Längsrichtung der Energieverzehrvorrichtung 100 übertragbar sind. Bei der Übertragung der Kräfte läuft der zugehörige Kraftfluss nahezu vollständig durch das in der Energieverzehrvorrichtung 100 integrierte Energieverzehrelement 30 hindurch. Das erste Kraftübertragungselement 20 weist einen ersten Stützkörper 80 auf, der hier als ein Rohrelement ausgeführt ist. Das zweite Kraftübertragungselement 40 weist einen zweiten, als Stange ausgeführten Stützkörper 90 auf. Sowohl das erste als auch das zweite Stützelement 80, 90 sind als reine Kraftübertragungsglieder ausgeführt, die sich (im Idealfall) nicht verformen und somit keine Energie absorbieren.

In Fig. 1 ist ein Zustand gezeigt, bei welchem der durch den Kraftfluss über das in der Energieverzehrvorrichtung 100 integrierte Energieverzehrelement 30 übertragene Energiebetrag den für das Energieverzehrelement 30 charakteristischen Ansprech-Energiebetrag noch nicht überschritten hat. Demnach sind in diesem Zustand die Kraftübertragungselemente 20, 40 relativ zueinander in Längsrechtung der Energieverzehrvorrichtung 100 im wesentlichen starr.

Fig. 2 zeigt die in der Fig. 1 dargestellte herkömmliche Energieverzehrvorrichtung 100 nach dem Ansprechen des Energieverzehrelementes 30. In diesem Zustand hat bereits der durch den Kraftfluss über das Energieverzehrelement 30 übertragene Energiebetrag den für das Ansprechen des Energieverzehrelementes 30 charakteristischen Ansprech-Energiebetrag überschritten, so dass sich das Energieverzehrelement 30, welches hier als Deformationsrohr ausgebildet ist, verformt und infolgedessen einen Teil der von den Kraftübertragungselementen 20, 40 übertragenen Energie absorbiert und abgebaut hat. In dem in Fig. 2 dargestellten Zustand wurden somit bereits die Kraftübertragungselemente 20, 40 relativ zueinander in Längsrichtung der Energieverzehrvorrichtung 100 verschoben.

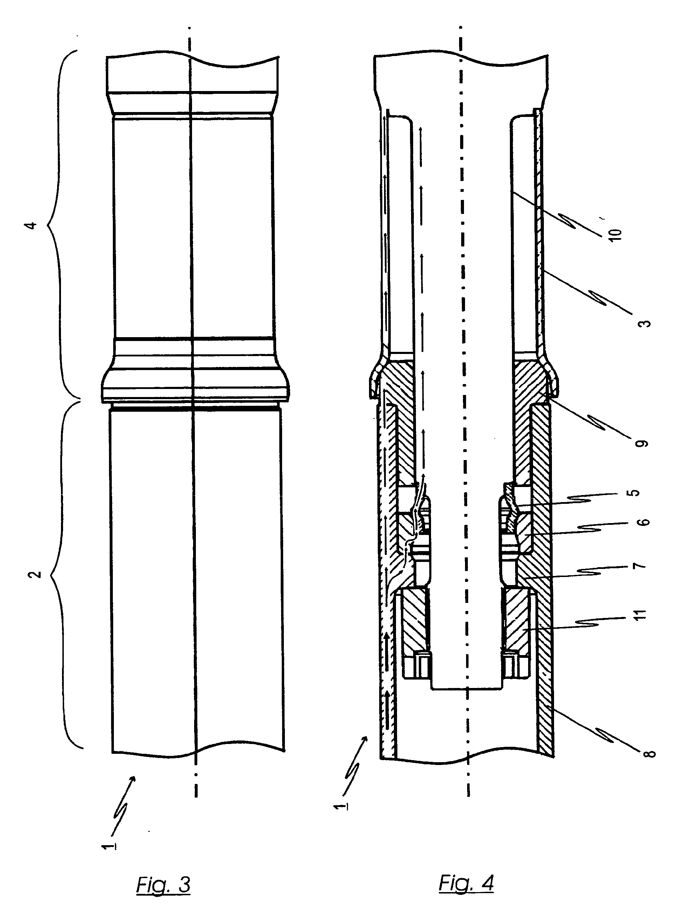

In Fig. 3 ist eine vorteilhafte Ausführungsform der erfindungsgemäßen Energieverzehrvorrichtung 1 gezeigt, während in Fig. 4 eine Schnittdarstellung hiervon dargestellt ist. Die erfindungsgemäße Energieverzehrvorrichtung 1 besteht aus einem ersten Kraftübertragungselement 2 und einem zweiten Kraftübertragungselement 4, die zur Übertragung von Zug- und Stoßkräften in Längsrichtung der Energieverzehrvorrichtung 1 ausgelegt sind. Dabei ist vorgesehen, dass das erste Kraftübertragungselement 2 einen als Rohr ausgebildeten ersten Stützkörper 8 und das zweite Kraftübertragungselement 4 einen als Stange ausgebildeten zweiten Stützkörper 10 aufweisen. Der als Stange ausgebildete zweite Stützkörper 10 ragt zumindest teilweise in den als Rohr ausgebildeten ersten Stützkörper 8 hinein, wobei der erste Stützkörper 8 mit Hilfe eines ringförmigen Vorsprunges 7 und mit Hilfe eines hülsenförmigen Elementes 9 an dem zweiten Stützkörper 10 abgestützt ist.

Des weiteren sind in der erfindungsgemäßen Energieverzehrvorrichtung 1 zwei parallel zueinander angeordnete Energieverzehrelemente 3, 9; 5, 6 angeordnet. In der dargestellten besonders bevorzugten Ausführungsform sind die Energieverzehrelemente 3 und 5 jeweils als destruktiv ausgebildete Energieverzehrelemente in der Gestalt eines Verformungselementes vorgesehen. Bei der Übertragung von Zug- und Stoßkräften über die Energieverzehrvorrichtung 1 wird der zugehörige Kraftfluss parallel durch das erste und das zweite Energieverzehrelement 3, 9; 5, 6 hindurchgeleitet. Demnach wird die durch Zug- und Stoßkräfte übertragene Energie vollständig über beide Energieverzehrelement 3, 9; 5, 6 geleitet.

Dabei ist das erste Energieverzehrelement 3, 9 durch ein Verformungskörper 3 und ein Körper 9 gebildet, der beim Ansprechen des Energieverzehrelementes den Verformungskörper 3 verformt. In gleicher Weise wird das zweite Energieverzehrelement 5, 6 durch einen Verformungskörper 5 und einen entsprechenden Gegenkörper 6 gebildet.

Dabei ist vorgesehen, dass das erste Energieverzehrelement 3, 9 ein für dieses Energieverzehrelement charakteristisches Ansprechverhalten aufweist, worunter zu verstehen ist, dass dieses Energieverzehrelement 3, 9 bis zu einem durch den Kraftfluss über dieses Energieverzehrelement übertragenen, festlegbaren ersten Energiebetrag E1 im wesentlichen formstabil ist. Nach Überschreiten des durch den Kraftfluss über dieses Energieverzehrelement 3, 9 übertragenen, charakteristischen Energiebetrags E1 tritt hingegen eine (beabsichtigte) Verformung des Energieverzehrelementes auf, infolgedessen zumindest ein Teil des über das Energieverzehrelement 3, 9 übertragenen Energiebetrages in Deformationsarbeit und Wärme umgewandelt wird.

In gleicher Weise ist auch das zweite Energieverzehrelement 5, 6 ausgeführt, welches ein für dieses Energieverzehrelement charakteristisches Ansprechverhalten aufweist. Bei der in der Fig. 4 gezeigten bevorzugten Ausführungsform der erfindungsgemäßen Energieverzehrvorrichtung 1 sind die beiden Energieverzehrelemente 3, 9; 5, 6 derart angeordnet, dass der bei der Übertragung der Zug- und Stoßkräfte in Längsrichtung der Energieverzehrvorrichtung 1 stattfindende Kraftfluss im wesentlichen vollständig durch die Energieverzehrelemente 3, 9; 5, 6 hindurch läuft. Dabei ist vorgesehen, dass durch beide Energieverzehrelemente 3, 9; 5, 6 im wesentlichen der gleiche Anteil des Energiebetrages der durch den Kraftfluss übertragenen Energie hindurch läuft.

In der bevorzugten Ausführungsform ist das erste und zweite Energieverzehrelement 3, 9; 5, 6 jeweils als Deformationsrohr bzw. Deformationshülse ausgebildet. Indem beispielsweise die Wandstärke dieser Deformationsrohre eingestellt wird, kann das für das jeweilige Energieverzehrelement charakteristische Ansprechverhalten vorab festgelegt werden. In der dargestellten Ausführungsform sind die Wandstärken der als Deformationsrohre ausgebildeten ersten und zweiten Energieverzehrelemente 3, 9; 5, 6 im wesentlichen identisch. Allerdings unterscheiden sich die Energieverzehrelemente 3, 9; 5, 6 dadurch, dass das erste Energieverzehrelement 3, 9 durch ein wesentlich längeres Deformationsrohr als das zweite Energieverzehrelement 5, 6 gebildet ist.

Die Gesamt-Ansprechkraft (E1+E2), die erforderlich ist, damit die Energieverzehrvorrichtung 1 zumindest einen Teil der durch das erste und zweite Kraftübertragungselement 2, 4 übertragenen Energie absorbiert, setzt sich aus der Addition der Einzelauslösekräfte (E1, E2) des ersten und zweiten Energieverzehrelementes 3, 9; 5, 6 zusammen. Aufgrund der unterschiedlichen Längen der als Deformationsrohre ausgebildeten ersten und zweiten Energieverzehrelemente 3, 9; 5, 6 ist der Verformungsweg des zweiten Energieverzehrelementes 5, 6 wesentlich kürzer als der des ersten Energieverzehrelementes 3, 9. Anders ausgedrückt bedeutet dies, dass der von dem ersten und dem zweiten Energieverzehrelement 3, 9; 5, 6 jeweils absorbierte und abgebaute Teil des übertragenden Energiebetrages vorab festlegbar ist. So ist der absorbierte und abgebaute Teil des übertragenden Energiebetrages bei einem Energieverzehrelement, welches aus einem kürzeren Deformationsrohr gebildet wird, kleiner als der von einem Energieverzehrelement absorbierte und abgebaute Teil des übertragenden Energiebetrags, wenn dieses Energieverzehrelement aus einem längeren Deformationsrohr mit gleicher Wandstärke gebildet wird.

Bei der in Fig. 3 und 4 dargestellten Energieverzehrvorrichtung ist des weiteren ein Spannelement 11 an dem als Stange ausgebildeten zweiten Stützkörper 10 des zweiten Kraftübertragungselementes 4 ausgebildet. Dieses Spannelement 11 dient dazu, die gesamte Energieverzehrvorrichtung 1 für die im normalen Betrieb auftretenden Kräfte vorzuspannen. Dabei werden die einzelnen Energieverzehrelemente 3, 9; 5, 6 mit dem Spannelement 11 spielfrei zwischen den Kraftübertragungselementen 2, 4 vorgespannt. Hierdurch wird die Konstruktion von kompakten, wartungsarmen Energiesystemen mit fast beliebigen Kraft-Weg-Kennlinien ermöglicht.

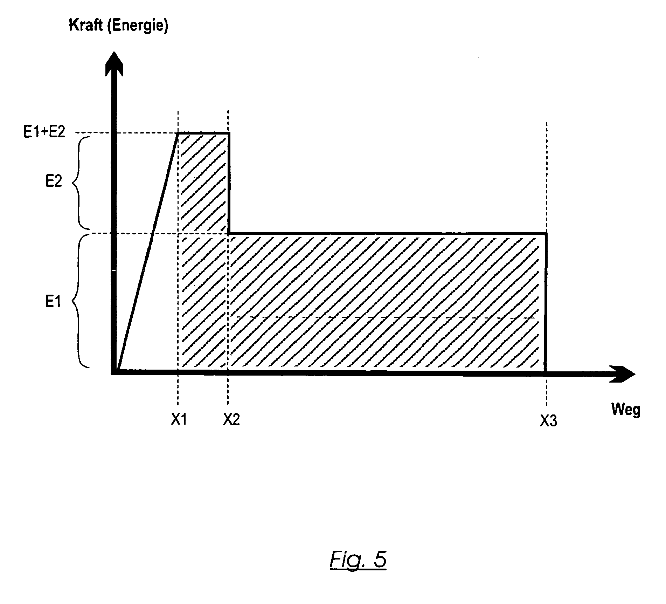

In Fig. 5 ist die Kraft-Weg-Kennlinie der in Fig. 3 und 4 dargestellten Energieverzehrvorrichtung 1 dargestellt. Der Verlauf des Kraftanstiegs (bis X1) resultiert dabei allerdings nicht aus der Energieverzehrvorrichtung sondern aus außerhalb davon angebrachten elastischen Elementen. Beim Erreichen bzw. Überschreiten der Auslösekraft (E1+E2) werden die Energieverzehrelemente 3, 9; 5, 6 gleichzeitig verformt. Bedingt durch den kurzen Verformungsweg des zweiten Energieverzehrelementes 5, 6 ist die Energieaufnahme dieses Energieverzehrelementes 5, 6 kurz nach Beginn der Verformung beendet (X2), so dass die weitere Energieaufnahme ausschließlich durch das erste Energieverzehrelement 3, 9 erfolgt. Die Auslösekraft (E1+E2) ergibt sich dabei aus der Addition der Einzelauslösekräfte (E1, E2) der Energieverzehrelemente 3, 9; 5, 6.

Das Integral unter dem in Fig. 5 dargestellten Kurvenverlauf stellt die von der Energieverzehrvorrichtung absorbierte Energie dar. Im einzelnen ist mit der schraffierten Fläche schematisch der Energiebetrag dargestellt, der von den in der Energieverzehrvorrichtung integrierten Energieverzehrelementen absorbiert und in Verformungsenergie (Wärme) umgewandelt wird. In dem Teilstück zwischen X1 und X2 ergibt sich die von der Energieverzehrvorrichtung absorbierte (Gesamt-)Energie aus der Überlagerung des von dem ersten und dem zweiten Energieverzehrelement jeweils absorbierten (Einzel-) Energiebetrages. Bei X2 hat sich das beispielsweise als Verformungselement ausgebildete zweite Energieverzehrelement vollständig deformiert und den für dieses Energieverzehrelement zugehörige maximalen Energiebetrag absorbiert. Zwischen X2 und X3 findet nur noch eine Energieaufnahme durch das erst Energieverzehrelement statt.

Es sei darauf hingewiesen, dass die Ausführung der Erfindung nicht auf das in den Figuren 3 und 4 beschriebene Ausführungsbeispiel beschränkt ist, sondern auch in einer Vielzahl von Varianten möglich ist. Insbesondere ist es denkbar, eine Vielzahl von zweiten Energieverzehrelementen in der Energieverzehrvorrichtung zu integrieren, um somit einen nahezu beliebig einstellbaren Kennlinienverlauf der Energieverzehrvorrichtung zu ermöglichen.

## Patentansprüche

1. Energieverzehrvorrichtung, mit einem ersten Kraftübertragungselement (2), einem zweiten Kraftübertragungselement (4) und einem ersten Energieverzehrelement (3, 9), wobei die Kraftübertragungselemente (2, 4) mit Hilfe des ersten Energieverzehrelementes (3,9) derart kraftschlüssig miteinander verbunden sind, dass Zug- und Stoßkräfte in Längsrichtung der Energieverzehrvorrichtung (1) übertragbar sind, indem der bei der Übertragung der Kräfte stattfindende Kraftfluss zumindest teilweise durch das erste Energieverzehrelement (3, 9) hindurch läuft, wobei das erste Energieverzehrelement (3, 9) derart ausgelegt ist, dass bis zu einem durch den Kraftfluss über das erste Energieverzehrelement (3, 9) übertragenen, festlegbaren ersten Energiebetrag die Kraftübertragungselemente (2, 4) relativ zueinander in Längsrichtung der Energieverzehrvorrichtung (1) im wesentlichen starr sind, und dass bei Überschreiten des durch den Kraftfluss über das erste Energieverzehrelement (3, 9) übertragenen, festlegbaren ersten Energiebetrages die Kraftübertragungselemente (2, 4) relativ zueinander in Längsrichtung der Energieverzehrvorrichtung (1) verschoben werden, wobei zumindest ein Teil des übertragenen Energiebetrags von dem ersten Energieverzehrelement (3, 9) absorbiert und abgebaut wird,
**dadurch gekennzeichnet, dass**
die Energieverzehrvorrichtung (1) ferner zumindest ein zweites Energieverzehrelement (5, 6) aufweist, welches in Bezug auf die Kraftübertragungselemente (2, 4) derart angeordnet ist, dass Zug- und Stoßkräfte in Längsrichtung der Energieverzehrvorrichtung (1) übertragbar sind, indem der bei der Übertragung der Kräfte stattfindende Kraftfluss zumindest teilweise durch das zweite Energieverzehrelement (5, 6) hindurch läuft, wobei das zweite Energieverzehrelement (5, 6) derart ausgelegt ist, dass bis zu einem durch den Kraftfluss durch das zweite Energieverzehrelement (5, 6) übertragenen, festlegbaren zweiten Energiebetrag die Kraftübertragungselemente (2, 4) relativ zueinander in Längsrichtung der Energieverzehrvorrichtung (1) im wesentlichen starr sind, und dass bei Überschreiten des durch den Kraftfluss über das zweite Energieverzehrelement (5, 6) übertragenen, festlegbaren zweiten Energiebetrages die Kraftübertragungselemente (2, 4) relativ zueinander in Längsrichtung der Energieverzehrvorrichtung (1) verschoben werden, und wobei das erste und das zweite Energieverzehrelement (3, 5) derart parallel zueinander angeordnet sind, dass der bei der Übertragung der Zug- und Stoßkräfte in Längsrichtung der Energieverzehrvorrichtung (1) stattfindende Kraftfluss parallel durch das erste und das zweite Energieverzehrelement (3, 5) läuft.

2. Energieverzehrvorrichtung nach Anspruch 1,
**dadurch gekennzeichnet, dass**
der bei der Übertragung der Zug- und Stoßkräfte in Längsrichtung der Energieverzehrvorrichtung (1) stattfindende Kraftfluss im wesentlichen vollständig durch die parallel geschalteten Energieverzehrelemente (3, 9; 5, 6) hindurch läuft.

3. Energieverzehrvorrichtung nach Anspruch 1 oder 2,
**dadurch gekennzeichnet, dass**
der bei der Übertragung der Zug- und Stoßkräfte in Längsrichtung der Energieverzehrvorrichtung (1) stattfindende Kraftfluss im wesentlichen vollständig durch die parallel geschalteten Energieverzehrelemente (3, 9; 5, 6) hindurch läuft, wobei der Anteil des Betrages der durch den Kraftfluss durch das erste und/oder durch das zweite Energieverzehrelement (3, 9; 5, 6) übertragenen Energie vorab festlegbar ist.

4. Energieverzehrvorrichtung nach einem der vorhergehenden Ansprüche,
**dadurch gekennzeichnet, dass**
das erste und/oder zweite Energieverzehrelement (3, 9; 5, 6) destruktiv oder regenerativ ausgebildet ist.

5. Energieverzehrvorrichtung nach einem der vorhergehenden Ansprüche,
**dadurch gekennzeichnet, dass**
ferner zumindest ein regenerativ ausgebildetes Energieverzehrelement vorgesehen ist.

6. Energieverzehrvorrichtung nach einem der vorhergehenden Ansprüche,
**dadurch gekennzeichnet, dass**
das zweite Energieverzehrelement (5, 6) eine Vielzahl von Energieverzehrelementen aufweist.

7. Energieverzehrvorrichtung nach einem der vorhergehenden Ansprüche,
**dadurch gekennzeichnet, dass**
der von dem ersten Energieverzehrelement (3, 9) und/oder dem zweiten Energieverzehrelement (5, 6) absorbierte und abgebaute Teil des übertragenen Energiebetrages festlegbar ist.

8. Energieverzehrvorrichtung nach einem der vorhergehenden Ansprüche,
**dadurch gekennzeichnet, dass**
die Energieverzehrelemente (3, 5) in der Energieverzehrvorrichtung derart angeordnet sind, dass sie zeitgleich nach Überschreiten eines durch Zug- und Stoßkräfte in Längsrichtung der Energieverzehrvorrichtung (1) übertragenen maximalen Energiebetrages ansprechen und zumindest einen Teil des maximalen Energiebetrages absorbieren und abbauen, wobei der maximale Energiebetrag der Summe aus dem ersten festlegbaren Energiebetrag und dem zweiten festlegbaren Energiebetrag entspricht.

9. Energieverzehrvorrichtung nach einem der vorhergehenden Ansprüche,
**dadurch gekennzeichnet, dass**
das erste Kraftübertragungselement (2) einen ersten Stützkörper (8) aufweist, über den Zug- und Stoßkräfte zu dem zweiten Kraftübertragungselement (4) geleitet werden, dass das zweite Kraftübertragungselement (4) einen zweiten Stützkörper (10) aufweist, auf den Zug- und Stoßkräfte von dem ersten Kraftübertragungselement (2) übertragen werden, und dass das erste und/oder zweite Energieverzehrelement (3, 9; 5, 6) Verformungskörper (3, 5) aufweisen, über welche die Zug- und Stoßkräfte von dem ersten Kraftübertragungselement (2) zu dem zweiten Kraftübertragungselement (4) und umgekehrt übertragen werden.

10. Energieverzehrvorrichtung nach Anspruch 9,
**dadurch gekennzeichnet, dass**
der erste Stützkörper (8) ein Hohlkörper, insbesondere ein Rohr ist, und dass der zweite Stützkörper (10) eine Stange ist, die zumindest teilweise in den Hohlkörper (8) hineinragt.

11. Energieverzehrvorrichtung nach einem der vorhergehenden Ansprüche,
**dadurch gekennzeichnet, dass**
die Energieverzehrvorrichtung (1) ferner zumindest ein Spannelement (11) aufweist, um die Energieverzehrelemente (3, 9; 5, 6) für die im normalen Betrieb auftretenden Zug- und Stoßkräfte zumindest teilweise spielfrei zwischen den Kraftübertragungselementen (2, 4) vorzuspannen.

12. Energieverzehrvorrichtung nach Anspruch 11, wobei das erste Kraftübertragungselement (2) einen ersten Stützkörper (8) aufweist, über den Zug- und Stoßkräfte zu dem zweiten Kraftübertragungselement (4) geleitet werden, und wobei das zweite Kraftübertragungselement (4) einen zweiten Stützkörper (10) aufweist, auf den Zug- und Stoßkräfte von dem ersten Kraftübertragungselement (2) übertragen werden,
**dadurch gekennzeichnet, dass**
das Spannelement (11) an dem ersten und/oder dem zweiten Stützkörper (8, 10) ausgebildet ist.

13. Verwendung der Energieverzehrvorrichtung nach einem der vorhergehenden Ansprüche als Zug-/Stoßsicherung in einem mehrgliedrigen Fahrzeug, insbesondere in einer Gelenk- oder Kupplungsanordnung eines Schienenfahrzeuges.

## Claims

1. An energy dissipating device comprising a first force transmission element (2), a second force transmission element (4) and a first energy-dissipating element (3, 9), wherein the force transmission elements (2, 4) are frictionally connected to one another by means of the first energy-dissipating element (3, 9) such that tractive and impact forces can be transmitted in the longitudinal direction of the energy dissipating device (1) by the force flow occurring upon the transmitting of forces passing at least partly through the first energy-dissipating element (3, 9), wherein the first energy-dissipating element (3, 9) is designed such that the force transmission elements (2, 4) are essentially rigid relative one another in the longitudinal direction of the energy dissipating device (1) up to a determinable first amount of energy transmitted by the force flow through the first energy-dissipating element (3, 9), and upon the determinable first amount of energy transmitted by the force flow through the first energy-dissipating element (3, 9) being exceeded, the force transmission elements (2, 4) are displaced relative one another in the longitudinal direction of the energy dissipating device (1), wherein at least a part of the transmitted amount of energy is absorbed and dissipated by the first energy-dissipating element (3, 9)
**characterized in that**
the energy dissipating device (1) further comprises at least one second energy-dissipating element (5, 6) arranged in relation to the first and second force transmission elements (2, 4) such that tractive and impact forces can be transmitted in the longitudinal direction of the energy dissipating device (1) by the force flow occurring upon the transmitting of forces passing at least partly through the second energy-dissipating element (5, 6), wherein the second energy-dissipating element (5, 6) is designed such that the force transmission elements (2, 4) are essentially rigid relative one another in the longitudinal direction of the energy dissipating device (1) up to a determinable second amount of energy transmitted by the force flow through the second energy-dissipating element (5, 6), and upon the determinable second amount of energy transmitted by the force flow through the second energy-dissipating element (5, 6) being exceeded, the force transmission elements (2, 4) are displaced relative one another in the longitudinal direction of the energy dissipating device (1), and wherein the first and the second energy-dissipating elements (3, 5) are disposed parallel to one another such that the force flow which occurs upon the transmitting of the tractive and impact forces in the longitudinal direction of the energy dissipating device (1) runs parallel through said first and said second energy-dissipating element (3, 5).

2. The energy dissipating device according to claim 1,
**characterized in that**
the force flow occurring upon the transmitting of tractive and impact forces in the longitudinal direction of the energy dissipating device (1) runs essentially completely through the parallel-connected energy-dissipating elements (3, 9; 5, 6).

3. The energy dissipating device according to claim 1 or 2,
**characterized in that**
the force flow occurring upon the transmitting of the tractive and impact forces in the longitudinal direction of the energy dissipating device (1) runs essentially completely through the parallel-connected energy-dissipating elements (3, 9; 5, 6), wherein the portion of the amount of energy transmitted by the force flow through the first and/or through the second energy-dissipating element (3, 9; 5, 6) is pre-definable.

4. The energy dissipating device according to any one of the preceding claims,
**characterized in that**
the first and/or second energy-dissipating element (3, 9; 5, 6) is designed so as to be destructive or regenerative.

5. The energy dissipating device according to any one of the preceding claims,
**characterized in that**
at least one regeneratively designed energy-dissipating element is furthermore provided.

6. The energy dissipating device according to any one of the preceding claims,
**characterized in that**
the second energy-dissipating element (5, 6) comprises a plurality of energy-dissipating elements.

7. The energy dissipating device according to any one of the preceding claims,
**characterized in that**
the portion of the transmitted amount of energy absorbed and dissipated by the first energy- dissipating element (3, 9) and/or the second energy-dissipating element (5, 6) can be defined.

8. The energy dissipating device according to any one of the preceding claims,
**characterized in that**
the energy-dissipating elements (3, 5) are arranged in the energy dissipating device such that upon the exceeding of a maximum amount of energy transmitted by tractive and impact forces in the longitudinal direction of the energy dissipating device (1), said elements activate simultaneously and absorb and dissipate at least a portion of the maximum amount of energy, wherein the maximum amount of energy corresponds to the sum total of the first definable amount and the second definable amount of energy.

9. The energy dissipating device according to any one of the preceding claims,
**characterized in that**
the first force transmission element (2) comprises a first supporting body (8) via which the tractive and impact forces are directed to the second force transmission element (4), that the second force transmission element (4) comprises a second supporting body (10) onto which tractive and impact forces from the first force transmission element (2) are transmitted, and that the first and/or second energy-dissipating element (3, 9; 5, 6) comprises deformation bodies (3, 5) via which the tractive and impact forces are transmitted from the first force transmission element (2) to the second force transmission element (4) and vice versa.

10. The energy dissipating device according to claim 9,
**characterized in that**
the first supporting body (8) is a hollow body, in particular a tube, and the second supporting body (10) is a rod which projects at least partly into the hollow body (8).

11. The energy dissipating device according to any one of the preceding claims,
**characterized in that**
the energy dissipating device (1) further comprises at least one clamping element (11) to pre-load the energy-dissipating elements (3, 9; 5, 6) for the tractive and impact forces occurring in normal operation such that they are at least partially without play between the force transmission elements (2, 4).

12. The energy dissipating device according to claim 11, wherein the first force transmission element (2) comprises a first supporting body (8) via which the tractive and impact forces are directed to the second force transmission element (4), and wherein the second force transmission element (4) comprises a second supporting body (10) onto which the tractive and impact forces from the first force transmission element (2) are transmitted,
**characterized in that**
the clamping element (11) is formed on the first and/or second supporting body (8, 10).

13. Use of the energy dissipating device according to any one of the preceding claims as a traction/shock absorber in a multi-membered vehicle, in particular in a joint or coupling system of a rail vehicle.

## Revendications

1. Dispositif d'absorption d'énergie avec un premier élément de transmission d'effort (2), un deuxième élément de transmission d'effort (4) et un premier élément d'absorption d'énergie (3, 9), les éléments de transmission d'effort (2, 4) étant reliés entre eux par adhérence par le biais du premier élément d'absorption d'énergie (3, 9) de façon que les efforts de traction et les efforts de tamponnement puissent être transmis dans la direction longitudinale du dispositif d'absorption d'énergie (1) grâce au fait que le flux de forces existant lors de la transmission des efforts traverse au moins partiellement le premier élément d'absorption d'énergie (3, 9), le premier élément d'absorption d'énergie (3, 9) étant conçu de façon que, jusqu'à une première quantité d'énergie définissable transmise par le flux de force via le premier élément d'absorption d'énergie (3, 9), les éléments de transmission d'effort (2, 4) soient sensiblement rigides l'un par rapport à l'autre dans la direction longitudinale du dispositif d'absorption d'énergie (1), et que lorsque l'on dépasse cette première quantité d'énergie définissable transmise par le flux de force via le premier élément d'absorption d'énergie (3, 9), les éléments de transmission d'effort (2, 4) sont déplacés l'un par rapport à l'autre dans la direction longitudinale du dispositif d'absorption d'énergie (1), au moins une partie de l'énergie transmise étant absorbée et dégradée par le premier élément d'absorption d'énergie (3, 9),
**caractérisé en ce que**
le dispositif d'absorption d'énergie (1) présente en outre au moins un deuxième élément d'absorption d'énergie (5, 6) agencé par rapport aux éléments de transmission d'effort (2, 4) de façon que les efforts de traction et de tamponnement puissent être transmis dans la direction longitudinale du dispositif d'absorption d'énergie (1) grâce au fait que le flux de force existant lors de la transmission des efforts traverse au moins partiellement le deuxième élément d'absorption d'énergie (5, 6), le deuxième élément d'absorption d'énergie (5, 6) étant conçu de façon que jusqu'à une deuxième quantité d'énergie définissable transmise par le flux de force via le deuxième élément d'absorption d'énergie (5, 6), les éléments de transmission d'effort (2, 4) soient sensiblement rigides l'un par rapport à l'autre dans la direction longitudinale du dispositif d'absorption d'énergie (1), et que lorsque l'on dépasse cette deuxième quantité d'énergie définissable transmise par le flux de force via le deuxième élément d'absorption d'énergie (5, 6), les éléments de transmission d'effort (2, 4) sont déplacés l'un par rapport à l'autre dans la direction longitudinale du dispositif d'absorption d'énergie (1), et le premier et le deuxième élément d'absorption d'énergie (3, 5) étant agencés parallèlement entre eux de telle sorte que le flux de force existant lors de la transmission des efforts de traction et de tamponnement dans la direction longitudinale du dispositif d'absorption d'énergie (1) traverse en parallèle le premier et le deuxième éléments d'absorption d'énergie (3, 5).

2. Dispositif d'absorption d'énergie selon la revendication 1, **caractérisé en ce que** le flux de force existant lors de la transmission des efforts de traction et de tamponnement dans la direction longitudinale du dispositif d'absorption d'énergie (1) traverse sensiblement entièrement les éléments d'absorption d'énergie agencés en parallèle (3, 9 ; 5, 6).

3. Dispositif d'absorption d'énergie selon la revendication 1 ou la revendication 2, **caractérisé en ce que** le flux de force existant lors de la transmission des efforts de traction et de tamponnement dans la direction longitudinale du dispositif d'absorption d'énergie (1) traverse sensiblement entièrement les éléments d'absorption d'énergie agencés en parallèle (3, 9 ; 5, 6), la part d'énergie transmise par le flux de force à travers le premier élément et/ou le deuxième élément d'absorption d'énergie (3, 9 ; 5, 6) pouvant être définie au préalable.

4. Dispositif d'absorption d'énergie selon l'une quelconque des revendications précédentes, **caractérisé en ce que** le premier et/ou le deuxième élément d'absorption d'énergie (3, 9; 5, 6) est de type destructif ou régénératif.

5. Dispositif d'absorption d'énergie selon l'une quelconque des revendications précédentes, **caractérisé en ce qu'**il est en outre prévu au moins un élément d'absorption d'énergie de type régénératif.

6. Dispositif d'absorption d'énergie selon l'une quelconque des revendications précédentes, **caractérisé en ce que** le deuxième élément d'absorption d'énergie (5, 6) présente une pluralité d'éléments d'absorption d'énergie.

7. Dispositif d'absorption d'énergie selon l'une quelconque des revendications précédentes, **caractérisé en ce que** l'on peut définir la part d'énergie transmise qui est absorbée et dégradée par le premier élément d'absorption d'énergie (3, 9) et/ou le deuxième élément d'absorption d'énergie (5, 6).

8. Dispositif d'absorption d'énergie selon l'une quelconque des revendications précédentes, **caractérisé en ce que** les éléments d'absorption d'énergie (3, 5) sont agencés dans le dispositif d'absorption d'énergie de façon qu'ils se déclenchent en même temps une fois dépassée la quantité d'énergie maximale transmise par des efforts de traction et de tamponnement dans la direction longitudinale du dispositif d'absorption d'énergie (1) et qu'ils absorbent et dégradent une partie au moins de cette quantité d'énergie maximale, la quantité d'énergie maximale correspondant à la somme de la première quantité d'énergie prédéfinissable et de la deuxième quantité d'énergie prédéfinissable.

9. Dispositif d'absorption d'énergie selon l'une quelconque des revendications précédentes, **caractérisé en ce que**
le premier élément de transmission d'effort (2) comprend un premier corps d'appui (8) transmettant les efforts de traction et de tamponnement au deuxième élément de transmission d'effort (4), **en ce que** le deuxième élément de transmission d'effort (4) présente un deuxième corps d'appui (10) auquel le premier élément de transmission d'effort (2) transmet les efforts de traction et de tamponnement et **en ce que** le premier et/ou le deuxième élément d'absorption d'énergie (3, 9 ; 5, 6) comportent des corps déformables (3, 5) par le biais desquels les efforts de traction et de tamponnement sont transmis par le premier élément de transmission d'effort (2) au deuxième élément de transmission d'effort (4) et inversement.

10. Dispositif d'absorption d'énergie selon la revendication 9, **caractérisé en ce que** le premier corps d'appui (8) est un corps creux, notamment un tube et **en ce que** le deuxième corps d'appui (10) est une tige, qui s'engage au moins partiellement dans le corps creux (8).

11. Dispositif d'absorption d'énergie selon l'une quelconque des revendications précédentes, **caractérisé en ce que**
le dispositif d'absorption d'énergie (1) comprend en outre au moins un élément de serrage (11) afin de précontraindre les éléments d'absorption d'énergie (3, 9 ; 5, 6) au moins partiellement et sans jeu entre les éléments de transmission d'effort (2, 4) pour les efforts de tension et de tamponnement survenant en fonctionnement normal.

12. Dispositif d'absorption d'énergie selon la revendication 11, **caractérisé en ce que** le premier élément de transmission d'effort (2) comprend un premier corps d'appui (8) transmettant les efforts de traction et de tamponnement au deuxième élément de transmission d'effort (4), et **en ce que** le deuxième élément de transmission d'effort (4) comprend un deuxième corps d'appui (10) auquel le premier élément de transmission d'effort (2) transmet les efforts de traction et de tamponnement,
**caractérisé en ce que**
l'élément de serrage (11) est formé sur le premier et/ou le deuxième corps d'appui (8, 10).

13. Utilisation du dispositif d'absorption d'énergie selon l'une des revendications précédentes en tant qu'amortisseur de traction et de tamponnement dans un véhicule composé d'une pluralité d'éléments, notamment dans un système articulé ou attelé de véhicule sur rails.
